# EUROPÄISCHE PATENTSCHRIFT

(11) **EP 1 892 556 B1**
(45) Veröffentlichungstag und Bekanntmachung des Hinweises auf die Patenterteilung: **11.03.2009**
(21) Anmeldenummer: 06017646.8
(22) Anmeldetag: 24.08.2006
(51) Int. Cl.: G02B 23/24, F23N 5/08, G01J 5/08, F23M 11/04

(54) **Lichtwellenleiter**
Light guide
Guide de lumière

(43) Veröffentlichungstag der Anmeldung: 27.02.2008
(73) Patentinhaber: SIEMENS AKTIENGESELLSCHAFT, 80333 München (DE)
(72) Erfinder: Bayram, Gülsen, 45356 Essen (DE); Braun, Gilbert, 52134 Herzogenrath (DE); Ertle, Volker, 45529 Hattingen (DE); Henke, Christian, 45472 Mülheim an der Ruhr (DE); Pahl, Andreas, 40589 Düsseldorf (DE); Prade, Bernd, Dr., 45478 Mülheim an der Ruhr (DE); Scheuer, Uwe, 45475 Mülheim (DE); Stammen, Wolfgang, 46119 Oberhausen (DE); Zastrozny, Edmund, 45359 Essen (DE)

(56) Entgegenhaltungen:
- EP-A- 0 425 229
- DE-A1- 3 823 494
- GB-A- 1 522 610
- JP-A- 59 026 702
- JP-A- 60 177 225

## Beschreibung

Die vorliegende Erfindung betrifft einen Lichtwellenleiter. Insbesondere betrifft sie einen Lichtwellenleiter, der in Brennern, bspw. von Gasturbinenanlagen, Verwendung finden kann.

Lichtwellenleiter sind an sich hinlänglich bekannt. Diese können jedoch in der Regel nicht in einer Hochtemperaturumgebung zur Anwendung kommen, wie sie bspw. im Brenner einer Gasturbinenanlage gegeben ist. Der Einsatz von Lichtquellenleitern im Brenner einer Gasturbinenanlage ist insbesondere von Interesse, um die Flamme in der Gasturbinenanlage beobachten zu können. Beispielsweise während des Zündvorgangs kann dann optisch festgestellt werden, ob die Zündung erfolgreich war, d.h. sich eine Flamme ausgebildet hat, oder ob die Zündung wiederholt werden muss. Auch während des Betriebs der Gasturbinenanlage kann ein optisches Überwachen der Flamme sinnvoll sein, bspw. um die Stabilität der Flamme zu überprüfen.

Die Druckschriften GB 1 522 610 A, JP 60 177 225 A, EP 0 425 229 A belegen den Stand der Technik.

Aufgabe der Erfindung ist es daher, ein Design für einen Lichtwellenleiter zur Verfügung zu stellen, das den Einsatz in einer Hochtemperaturumgebung möglich macht.

Eine zweite Aufgabe der vorliegenden Erfindung ist es, einen Brenner, insbesondere für eine Gasturbinenanlage, zur Verfügung zu stellen, welche die optische Beobachtung der Flamme ermöglicht.

Die erste Aufgabe wird durch einen Lichtwellenleiter nach Anspruch 1 gelöst, die zweite Aufgabe durch einen Brenner nach Anspruch 10. Die abhängigen Ansprüche enthalten vorteilhafte Ausgestaltungen der Erfindung.

Ein erfindungsgemäßer Lichtwellenleiter umfasst ein rohr- oder schlauchartiges Gehäuse, welches eine Eingangsöffnung, eine Ausgangsöffnung und eine sich von der Eingangsöffnung zur Ausgangsöffnung erstreckende (gedachte) Mittellinie aufweist. Im Inneren des Gehäuses sind transparente Kugeln entlang der Mittellinie aneinandergereiht. Das Gehäuse kann insbesondere aus Metall bestehen. Als Kugeln können polierte Quarzkugeln zum Einsatz kommen.

Der Aufbau des Erfindungsgemäßen Lichtwellenleiters unterscheidet sich grundsätzlich von den Lichtwellenleitern nach Stand der Technik, die eine Faser mit niedrigem Brechungsindex und einen die Faser umgebenden Mantel mit höherem Brechungsindex aufweisen. Das Leiten von Licht beruht in diesen Fasern auf einer Totalreflexion an der Grenzfläche zwischen der Kernfaser und dem umgebenden Mantel. Derartige Lichtwellenleiter lassen sich jedoch nicht ohne weiteres in einer Hochtemperaturumgebung, wie sie bspw. im Brenner in einer Gasturbinenanlage vorliegt, einsetzen. Im erfindungsgemäßen Lichtwellenleiter erfolgt das Leiten des Lichtes hingegen nicht auf Grund einer Totalreflexion zwischen einem Kern und einem Mantel sondern auf Grund der Brechung eines Lichtstrahls beim Ein- bzw. Austritt aus den transparenten Kugeln. Die Aneinanderreihung von Kugeln ermöglicht daher den Aufbau eines Lichtwellenleiters. Ein derartiger Lichtwellenleiter kann auch in einer Hochtemperaturumgebung zum Einsatz kommen, wenn Gehäuse und Kugeln temperaturfest sind, wie dies bspw. der Fall ist, wenn das Gehäuse aus Metall und die Kugeln aus poliertem Quarz hergestellt sind.

In einer Weiterbildung des erfindungsgemäßen Lichtwellenleiters ist das Gehäuse als flexibler Schlauch, bspw. als Metallschlauch ausgebildet. Dies ermöglicht es, den Lichtwellenleiter flexibel an seinen Bestimmungsort heran zu führen. Falls der Lichtwellenleiter fest eingebaut ist, ist aber auch eine starre Röhre als Gehäuse denkbar.

Mittels Abstandshalter, die im Gehäuse zwischen den Kugeln angeordnet sind, kann dafür gesorgt werden, dass die Kugeln den zum Leiten des Lichtes optimalen Abstand voneinander aufweisen. Die Abstandshalter können bspw. als an der Innerseite des Gehäuses fixierte Ringe ausgebildet sein.

Erfindungsgemäß ist jedoch an der Innenseite des Gehäuses ein sich von der Eingangsöffnung bis zur Ausgangsöffnung erstreckender und spiralförmig gewundener Vorsprung vorhanden. Die Abstände der Windungen voneinander sind dabei so gewählt, dass die Kugeln zwischen benachbarten Windungen Platz finden. Diese Ausgestaltung ist insbesondere im Hinblick auf das Herstellen des erfindungsgemäßen Lichtwellenleiters vorteilhaft. Die Windungen ermöglichen es nämlich, die Kugeln nacheinander in den Lichtwellenleiter hineinlaufen zu lassen, wobei sie von den Windungen geführt werden.

Die Eingangsöffnung und/oder die Ausgangsöffnung des Gehäuses können im erfindungsgemäßen Lichtwellenleiter mit einer transparenten Scheibe, bspw. einer Quarzscheibe, verschlossen sein.

Erfindungsgemäß wird außerdem ein Brenner zur Verfügung gestellt, in den ein erfindungsgemäßer Lichtwellenleiter integriert ist, welcher aus hochtemperaturfesten Materialien, bspw. Metall und Quarz, hergestellt ist. Ein derartiger Brenner ermöglicht es, während des Betriebs der Gasturbine die Flamme von außerhalb der Gasturbine aus direkt zu beobachten oder mittels eines Kamerachips aufzunehmen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- FIG 1: zeigt ein Schnitt durch einen Lichtwellenleiter gemäß einem Vergleichsbeispiel entlang dessen Mittellinie, wie er nicht beansprucht ist.
- FIG 2: zeigt ein Ende des Lichtwellenleiters aus FIG 1.
- FIG 3: ist eine schematische Darstellung zum Verdeutlichen des lichtwellenleitenden Effekts im Lichtwellenleiter.
- FIG 4: zeigt ein Ausführungsbeispiel des erfindungsgemäßen Lichtwellenleiters.
- FIG 5: zeigt einen Brenner für eine Gasturbinenanlage mit integriertem Lichtwellenleiter.

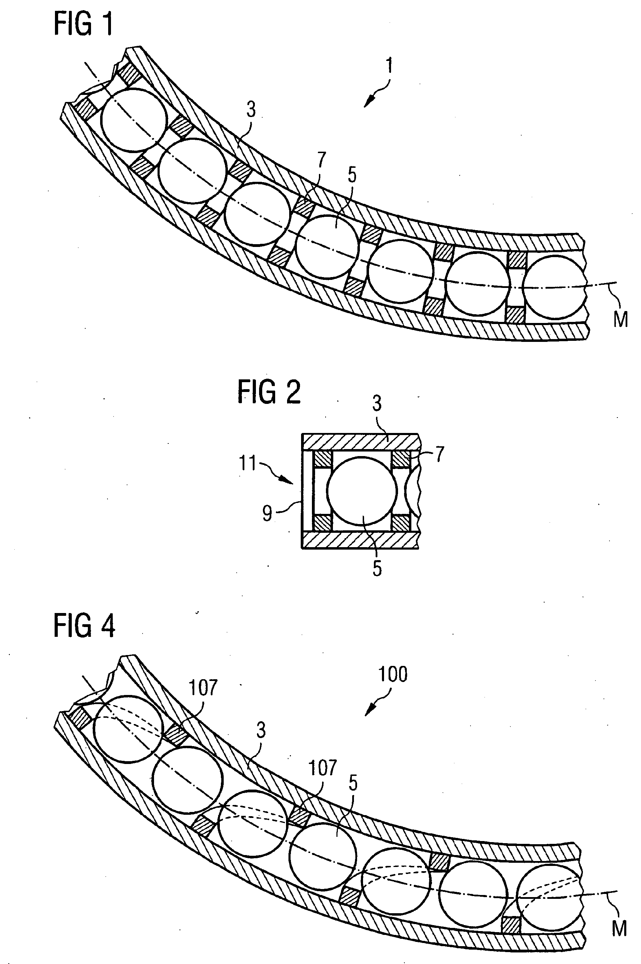

Ein nicht erfindungsgemäßer Lichtwellenleiter ist in FIG 1 dargestellt. Die FIG zeigt einen Ausschnitt aus dem Lichtwellenleiter 1 in einem Schnitt entlang seine Mittelinie M. Der Lichtwellenleiter 1 umfasst einen flexiblen Metallschlauch 3, der bspw. als Wellbalg oder Faltenbalg ausgebildet sein kann, und eine Vielzahl von polierten Quarzkugeln 5, die entlang der Mittellinie M des Metallschlauches 3 aneinandergereiht sind. An ihrem Platz gehalten werden die Quarzkugeln 5 von Abstandshalterringen 7, die aus Metall bestehen und in regelmäßigen Abständen an der Innenseite des Metallschlauches 3 fixiert sind. Zwischen je zwei Abstandshaltern 7 ist eine Quarzkugel 5 angeordnet. An seinen Enden weist der Metallschlauch 3 eine Eingangs- und eine Ausgangsöffnung auf, die mittels Quarzscheiben 9 verschlossen sind. Ein Ende 11 des Metallschlauches 3 mit einer Quarzscheibe 9 ist in FIG 2 dargestellt.

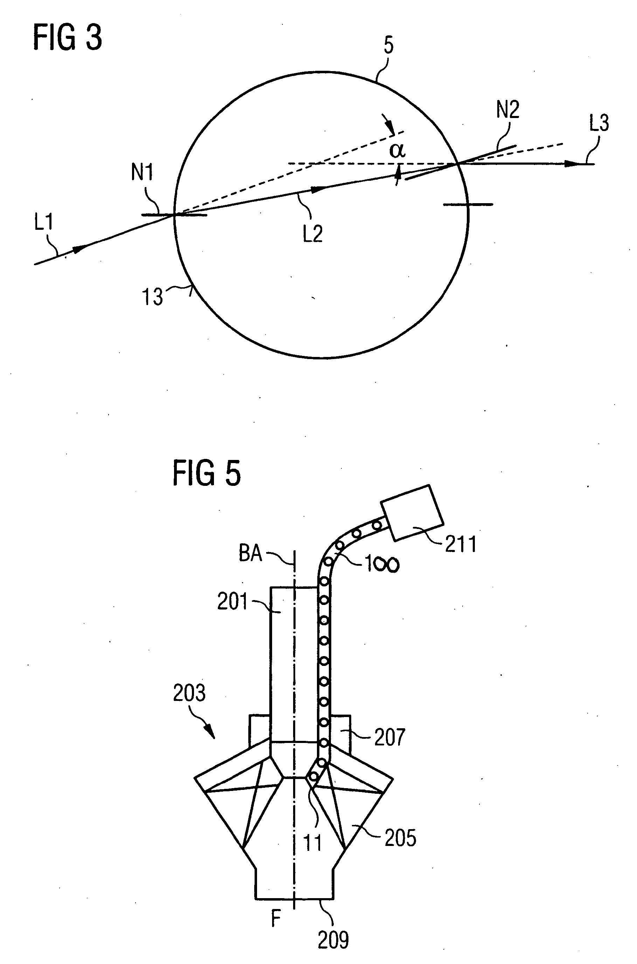

Im in FIG 1 dargestellten Lichtwellenleiter 1 sorgen die polierten Quarzkugeln 5 für ein Ablenken von Lichtstrahlen. Die Ablenkung ist in FIG 3 schematisch dargestellt. Ein auf die Oberfläche 13 einer polierten Quarzkugel 5 auftreffender Lichtstrahl L1 wird beim Durchtritt durch die Grenzfläche zwischen Luft und dem Quarzmaterial zur Oberflächennormalen N1 am Durchtrittspunkt hin abgelenkt. Im Inneren der Quarzkugel 5 breitet sich der Lichtstrahl L2 entlang einer geraden Linie aus, die einer Sekante der Quarzkugel 5 entspricht. Mit anderen Worten, die Linie L2 verläuft nicht durch den Mittelpunkt der Quarzkugel 5, sofern der einfallende Lichtstrahl L1 beim Auftreffen auf die Oberfläche 13 der Quarzkugel 5 einen Winkel zur Oberflächennormalen N1 aufweist. Am Austrittspunkt des Lichtstrahles L2 aus der Quarzkugel 5 wird der Lichtstrahl dann von der Oberflächennormalen N2 weg gebrochen. Er tritt als Lichtstrahl L3 aus der polierten Quarzkugel 5 aus. Insgesamt wird durch die zweimalige Brechung der Lichtstrahl L1 um den Winkel α aus seiner ursprünglichen Richtung abgelenkt. Durch das Aneinanderreihen der polierten Quarzkugeln 5 kann so der Lichtstrahl durch den Metallschlauch 3 geleitet werden.

Ein Ausführungsbeispiel für den erfindungsgemäßen Lichtwellenleiter 100 ist in FIG 4 dargestellt. Elemente des Lichtwellenleiters 100, die mit Elementen des Lichtwellenleiters 1 aus Figur 1 identisch sind, sind mit denselben Bezugszeichen wie in FIG 1 bezeichnet und werden nicht noch einmal erläutet.

Der Lichtwellenleiter 100 des Ausführungsbeispiels unterscheidet sich vom Lichtwellenleiter 1 im Wesentlichen dadurch, dass statt der Abstandhalterringe 7 ein spiralförmig gewundener Vorsprung 107 an der Innenseite des Metallschlauches 3 fixiert ist. Der spiralförmig gewundene Vorsprung 107 beginnt an der Eingangsöffnung des Metallschlauches 3 und setzt sich bis zur Ausgangsöffnung kontinuierlich fort. Die Abstände A zwischen zwei benachbarten Windungen sind dabei so gewählt, dass die Quarzkugeln 5 entlang des gewundenen Vorsprunges 107 durch den Metallschlauch laufen können. Das Einfüllen der Quarzkugeln kann dann nach der kompletten Fertigstellung des Metallschlauches 3 mit an seiner Innenseite fixiertem spiralförmigen Vorsprung 107 durch Einlaufen lassen der Kugeln erfolgen.

Zwar sind im beschriebenen Ausführungsbeispiel flexible Metallschläuche als Gehäuse des Lichtwellenleiters zur Anwendung gekommen, jedoch können auch andere Materialien für das Gehäuse Verwendung finden. Bspw. kann als hochtemperaturfestes Gehäusematerial Keramik zur Verwendung kommen. Dieses ist zwar nicht flexibel, weist dafür aber gute Hochtemperatureigenschaften auf. Ein Keramikgehäuse kann bspw. gegossen und anschließend gebrannt werden, was eine weitgehend freie Formgebung ermöglicht. Wenn ein spiralförmiger Vorsprung mitgegossen wird, können die Kugeln dann einfach in das Keramikgehäuse eingeführt werden.

Ein erfindungsgemäßer Brenner, welcher mit einem erfindungsgemäßen Lichtwellenleiter ausgestattet ist, ist in FIG 5 dargestellt. Der Brenner ist als Brenner für eine Gasturbinenanlage ausgestaltet, er kann jedoch grundsätzlich auch als Brenner für eine beliebige Feuerungsanlage ausgebildet sein. Im in FIG 5 dargestellten Ausführungsbeispiel umfasst der Brenner einen Pilotbrenner 201, der konzentrisch zu einer zentralen Brennerachse BA angeordnet ist. Um den Pilotbrenner 201 herum ist ein Hauptbrenner 203 angeordnet, der einen Luftzufuhrkanal 205 und einen ebenfalls ringförmig um den Pilotbrenner herum angeordneten Brennstoffzufuhrkanal 207 zur Zufuhr eines flüssigen oder gasförmigen Brennstoffes umfasst. Stromab des Brennerausgangs 209 brennt die Flamme F.

Im vorliegenden Ausführungsbeispiel ist an der Außenseite des Pilotbrenners 201 ein erfindungsgemäßer Lichtwellenleiter 100 gemäß dem Ausführungsbeispiel bis in den Luftzufuhrkanal 205 geführt. Das im Luftzufuhrkanal 205 angeordnete Ende des Lichtwellenleiters 100 ist so orientiert, dass Lichtstrahlen, die von der Flamme F ausgehen, durch die Quarzscheibe 9 in den Lichtwellenleiter 100 eintreten können. Mit Hilfe der polierten Quarzkugeln wird dieses Licht dann zum Ausgang des Lichtwellenleiters 100 geleitet, wo sich ein Kamerachip 211 befindet. Statt des Kamerachips kann sich am Ausgang des Lichtwellenleiters 100 auch lediglich eine Quarzscheibe befinden, durch die Flamme durch den Lichtwellenleiter 100 visuell überprüft bzw. überwacht werden kann.

Obwohl im vorliegenden Ausführungsbeispiel mit Bezug auf FIG 5 ein spezielles Brennerdesign beschrieben worden ist, kann der erfindungsgemäße Lichtwellenleiter auch in jedes andere Brennerdesign integriert werden. Die Verwendung des erfindungsgemäßen Lichtwellenleiters ist daher nicht auf das in FIG 5 beschriebene Brennerdesign beschränkt.

## Patentansprüche

1. Lichtwellenleiter (100) mit einem rohr- oder schlauchartigen Gehäuse (3), welches eine Eingangsöffnung, eine Ausgangsöffnung und eine sich von der Eingangsöffnung zur Ausgangsöffnung erstreckende Mittellinie (M) aufweist, und mit transparenten Kugeln (5), die im Inneren des Gehäuses (3) entlang der Mittellinie (M) aneinandergereiht sind, wobei das Leiten des Lichts auf Grund der Brechung eines Lichtstrahls beim Ein- bzw. Austritt aus den transparenten Kugeln erfolgt,
**dadurch gekennzeichnet, dass** an der Innenseite des Gehäuses (3) ein sich von der Eingangsöffnung bis zur Ausgangsöffnung erstreckender und spiralförmig gewundener Vorsprung (107) vorhanden ist, wobei die Abstände der Windungen voneinander so gewählt sind, dass die Kugeln (5) zwischen benachbarten Windungen Platz finden.

2. Lichtwellenleiter (100) nach Anspruch 1, in dem das Gehäuse (3) aus Metall besteht.

3. Lichtwellenleiter (100) nach Anspruch 1 oder 2, in dem die Kugeln polierte Quarzkugeln (5) sind.

4. Lichtwellenleiter (100) nach einem der vorangehenden Ansprüche, in dem das Gehäuse als flexibler Schlauch (3) ausgebildet ist.

5. Lichtwellenleiter (100) nach einem der vorangehenden Ansprüche, in dem die Eingangsöffnung und/oder die Ausgangsöffnung mit einer transparenten Scheibe (9) verschlossen sind bzw. ist.

6. Lichtwellenleiter (100) nach Anspruch 5, in dem die transparente Scheibe eine Quarzscheibe (9) ist.

7. Brenner mit einem integrierten Lichtwellenleiter (100) nach einem der vorangehenden Ansprüche, der aus hochtemperaturfesten Materialien hergestellt ist.

## Claims

1. Optical waveguide (100) with a tubular housing (3) which has an input opening, an output opening and a centre line (M) extending from the input opening to the output opening, and with transparent spheres (5) which are lined up against one another in the interior of the housing (3) along the centre line (M), the light being guided on the basis of the refraction of a light beam upon entering and exiting from the transparent spheres, **characterized in that** there is present on the inner side of the housing (3) a projection (107) which extends from the input opening up to the output opening and is spirally wound, the spacings of the turns from one another being selected such that the spheres (5) find space between neighbouring turns.

2. Optical waveguide (100) according to Claim 1, in which the housing (3) consists of metal.

3. Optical waveguide (100) according to Claim 1 or 2, in which the spheres are polished quartz spheres (5).

4. Optical waveguide (100) according to one of the preceding claims, in which the housing is designed as a flexible tube (3).

5. Optical waveguide (100) according to one of the preceding claims, in which the input opening and/or the output opening are/is sealed with a transparent disc (9).

6. Optical waveguide (100) according to Claim 5, in which the transparent disc is a quartz disc (9).

7. Burner with an integrated optical waveguide (100) according to one of the preceding claims, which is produced from high temperature resistant materials.

## Revendications

1. Guide (100) d'ondes lumineuses comprenant une enveloppe de type (3) tubulaire ou à conduit souple, qui a une ouverture d'entrée, une ouverture de sortie, et une ligne ( M ) médiane s'étendant de l'ouverture d'entrée à l'ouverture de sortie et des billes ( 5 ) transparentes qui sont rangées les unes contre les autres à l'intérieur de l'enveloppe ( 3 ) le long de la ligne ( M ) médiane, le guidage de la lumière s'effectuant sur la base de la réfraction d'un faisceau lumineux lors de l'entrée ou de la sortie des billes transparentes, **caractérisé en ce que** sur la face intérieure de l'enveloppe ( 3 ) il y a une saillie ( 107 ) s'étendant de l'ouverture d'entrée à l'ouverture de sortie et enroulée en spirale, les distances entre les spires étant choisis de façon à ce que les billes ( 5 ) trouvent place entre des spires voisines.

2. Guide ( 100 ) d'ondes lumineuses suivant la revendication 1, dans lequel l'enveloppe ( 3 ) est en métal.

3. Guide ( 100 ) d'ondes lumineuses suivant la revendication 1 ou 2, dans lequel les billes sont des billes ( 5 ) de quartz polies.

4. Guide ( 100 ) d'ondes lumineuses suivant l'une des revendications précédentes, dans lequel l'enveloppe est constituée sous la forme d'un tube ( 4 ) souple.

5. Guide ( 100 ) d'ondes lumineuses suivant l'une des revendications précédentes, dans lequel l'ouverture d'entrée et/ou de sortie est ou sont fermée(s) par un disque ( 9 ) transparent.

6. Guide ( 100 ) d'ondes lumineuses suivant la revendication 5, dans lequel le disque transparent est un disque ( 9 ) de quartz.

7. Brûleur à guide ( 100 ) d'ondes lumineuses intégré suivant l'une des revendications précédentes, qui est fabriqué en des matériaux résistants à des températures hautes.
